# FASCICULE DE BREVET EUROPEEN

(11) **EP 2 158 633 B1**
(45) Date de publication et mention de la délivrance du brevet: **18.05.2011**
(21) Numéro de dépôt: 08806031.4
(22) Date de dépôt: 19.06.2008
(51) Int. Cl.: H01M 8/04, B60L 11/18, F02M 31/00, F28F 27/00, F25B 49/02, F02B 29/00, G05D 23/00, G05D 23/185

(54) **PROCEDE DE REGULATION DE LA TEMPERATURE D'UNE LIGNE D'ADMISSION CATHODIQUE D'UNE PILE A COMBUSTIBLE**
VERFAHREN ZUR STEUERUNG DER TEMPERATUR EINER KATHODENZUFUHRLEITUNG EINER BRENNSTOFFZELLE
METHOD FOR CONTROLLING THE TEMPERATURE OF A CATHODE FEEDLINE OF A FUEL CELL

(30) Priorité: 19.06.2007 FR 0755858; 19.06.2007 FR 0755859
(43) Date de publication de la demande: 03.03.2010
(73) Titulaire: Peugeot Citroën Automobiles SA, 78140 Vélizy-Villacoublay (FR)
(72) Inventeur: SAINFLOU, Damien-Pierre, F-95880 Enghien Les Bains (FR); BRESSON, Laurent, F-54000 Nancy (FR)
(74) Mandataire: Ménès, Catherine
(86) Numéro de dépôt international: PCT/FR2008/051097
(87) Numéro de publication internationale: WO 2009/004253

(56) Documents cités:
- DE-A1- 19 931 063
- FR-A- 2 866 476
- US-A1- 2002 015 867
- US-B1- 6 608 463

## Description

La présente invention revendique la priorité des demandes françaises 0755858 et 0755859 déposées le 19/06/2007 dont les contenus (description, revendications et dessins) sont incorporés ici par référence.

La présente invention concerne le domaine de régulation de la ligne d'alimentation d'une source d'énergie dans un véhicule, par exemple un véhicule thermique, électrique ou hybride, équipé ou non d'une pile à combustible. Plus particulièrement, la présente invention concerne le domaine de régulation de la ligne d'air d'admission d'une pile à combustible dans un groupe électrogène embarqué sur véhicule, soit en source principale d'énergie soit en source d'énergie complémentaire. L'utilisation de tels groupes électrogènes embarqués s'est considérablement développée récemment, notamment dans le domaine des véhicules automobiles.

Dans le cas d'une pile à combustible, il est connu qu'une telle pile, par exemple une pile à combustible à membranes échangeuses de protons dite PEMFC, produit de l'électricité à partir de la réaction de synthèse de l'eau par combinaison d'oxygène et d'hydrogène.

Comme le montre la figure 61, illustrant le schéma simplifié d'une pile à combustible, l'oxygène, le plus souvent provenant de l'air atmosphérique pressurisé par un compresseur A et dont la température est adaptée, est acheminé, le cas échéant après humidification au poste C, vers la cathode Ha tandis que l'hydrogène, provenant d'une source B de stockage pure ou de la transformation d'un carburant hydrogéné est acheminé à l'anode Hb d'une pile à combustible H pour produire de l'électricité G par réaction chimique. Cette pile à combustible est refroidie par exemple par un système de refroidissement D. A la sortie de la pile à combustible H, de la cathode Ha sort par la ligne d'échappement E un mélange d'air humide appauvri en d'environ 50% en oxygène et de l'eau produite lors de la réaction dans la pile à combustible. De l'anode, sort par la ligne d'échappement F un mélange d'hydrogène, d'azote et d'eau, ceci de façon continue ou par intermittence lors de purges. En plus de ces deux évacuations, comme la pile à combustible présente des fuites inévitables en hydrogène, pour des raisons de sécurité du fait de risque d'explosion, les fuites en hydrogène et de certains organes transportant de l'hydrogène peuvent être canalisées dans un carter J puis acheminées vers l'extérieur par un système actif de ventilation débouchant sur la ligne d'échappement K.

Pour le bon fonctionnement de la pile à combustible, il convient de réguler la température d'air à l'entrée d'admission de la pile dans une plage de température entre une limite inférieure et une limite supérieure. La limite inférieure permet de ne pas dégrader le fonctionnement de la ligne d'air par le gel dans le cas d'un fonctionnement par grand froid étant donné que l'aspiration d'air à une température très basse pourrait faire geler l'eau produite par la pile et/ou l'humidificateur C. La limite supérieure de la plage de température correspond à la limite de résistance thermique de la pile en entrée d'air et/ou de l'humidificateur tant pour son efficacité que pour sa résistance propre.

En effet, le compresseur d'air en augmentant la pression augmente la température : par exemple pour comprimer 30 g/s d'air à 0,5 bar, l'air subit une élévation de l'ordre de 70°C, ce qui est incompatible avec des températures de fonctionnement de la pile et/ou de l'humidificateur lorsqu'il fait par exemple 37°C d'ambiance : l'air serait alors porté à une température de l'ordre de 6105°C.

A l'inverse, cette élévation de température n'est plus que de 5 °C à 5 g/s pour un même ensemble pile à combustible. Or si l'air ambiant est par exemple à -20°C, l'apport en température au ralenti n'est pas suffisant pour sortir des conditions de gel. Ce dernier point est tout particulièrement pertinent pour les véhicules électriques à augmentateur d'autonomie appelés aussi " Range Extender ", où la pile à combustible représente une source d'énergie complémentaire et pour lesquels la puissance pile à combustible et la vitesse du véhicule ne sont à priori pas liées puisque c'est une batterie qui assure l'essentiel de l'apport d'énergie.

Il convient donc de prévoir entre le compresseur et l'humidificateur un dispositif de régulation de température de l'air dans la ligne d'admission qui tient compte des conditions extérieures de température.

Les solutions existantes de refroidissement de la ligne d'air d'admission utilisent usuellement l'air extérieur via un échangeur air/air, ou parfois un échangeur air/eau sur la boucle d'eau de basse température utilisé pour le refroidissement des organes d'électronique de puissance des systèmes ou du véhicule (machine électrique, convertisseur, onduleurs, etc...). Un circuit de refroidissement commun aux organes électroniques et à l'air d'admission d'une pile à combustible est montré, par exemple, dans le document FR-A-2 866 476.

Les solutions existantes pour élever la température de la ligne d'air d'admission utilisent principalement une résistance électrique pour le chauffage de l'air, afin de palier au manque d'élévation de température à faible régime due à l'effet de compression de l'alimentation en air. Cette résistance électrique est généralement couplée avec une fonction de dérivation de l'air du refroidisseur d'air. On trouve parfois un ralenti accéléré du compresseur qui permet de chauffer plus que ce que le débit nécessaire au faible régime pile n'exigerait. Ces solutions présentent un coût énergétique élevé.

De plus, toutes ces solutions ne sont pas adaptées au fonctionnement découplé de la pile et du véhicule comme c'est le cas dans les véhicules à augmentateur d'autonomie, où la pile à combustible ne représente qu'un appoint d'énergie.

Le problème à la base de la présente invention est de pouvoir réguler la température dans une ligne d'admission pour une source d'énergie embarquée dans un véhicule, afin que cette source d'énergie puisse fonctionner en conditions optimales sous toutes températures extérieures et dans toutes les conditions de vie du système.

A cet effet, l'invention a pour objet un procédé de régulation de la température d'une ligne d'admission cathodique d'une pile à combustible, la pile étant refroidie au moyen d'un boucle de refroidissement traversant un compartiment interne de la pile, la ligne d'admission étant par ailleurs munie d'un compartiment interne refroidi au moyen d'une boucle de refroidissement, ladite ligne d'admission étant associée à des moyens de régulation thermique, caractérisé en ce que lesdits moyens de régulation thermique comportent un premier échangeur thermique dit froid et un second échangeur dit chaud, associé à la boucle de refroidissement de la pile.

Avantageusement, la ligne d'admission traverse en série, le premier échangeur froid, élément d'une boucle froide et le second échangeur chaud et la température de la ligne d'admission est régulée en contrôlant les débits de fluide de refroidissement circulant dans la boucle froide et/ou la boucle de refroidissement de la pile.

Dans une variante, la ligne d'admission comporte deux branches parallèles, l'une des branches traversant le premier échangeur froid, l'autre branche traversant le second échangeur chaud, et on contrôle les débits d'oxygène admis dans l'une ou l'autre des branches.

Dans une variante, les moyens de régulation thermique comportent une première boucle dite froide associée à un échangeur thermique (L), ladite boucle étant elle-même associée à la boucle de refroidissement de la pile.

L'invention a également pour objet un dispositif de régulation de la température d'une ligne d'admission cathodique d'une pile à combustible comportant une boucle de refroidissement de la pile, associée à un échangeur externe et un échangeur - traversé par la ligne d'admission cathodique - associé à une boucle de contrôle thermique de la ligne d'admission, et des moyens pour échanger la chaleur et ou contrôler les flux de circulation entre la boucle de refroidissement de la pile et la ligne d'admission cathodique ou entre la la boucle de refroidissement de la pile et la boucle de contrôle thermique de la ligne d'admission.

Avantageusement, la la boucle de refroidissement de la pile comprend un moyen de chauffage placé en dérivation de l'échangeur de chaleur vers l'extérieur de la boucle, une électrovanne permettant de réguler les flux traversant le moyen de chauffage ou l'échangeur de chaleur pour maintenir une température de consigne.

Dans une variante, le dispositif comporte de plus une logique de commande pour commander des moyens de régulation des flux circulant dans les différentes boucles de refroidissement ou de contrôle thermique, notamment en fonction d'une température de consigne donnée, cette régulation pouvant amener à refroidir le fluide ou à le réchauffer, notamment par grand froid.

Dans une variante, la ligne d'admission comporte deux branches parallèles, avec des moyens de régulation du débit dans l'une ou l'autre branche, une première branche étant traversée par l'échangeur associé à la boucle de contrôle thermique et la seconde branche par un échangeur associé à l'échangeur externe de la boucle de refroidissement de la pile.

Dans une variante, la ligne d'admission traverse en série, l'échangeur associé à la boucle de contrôle thermique et un échangeur associé à l'échangeur externe de la boucle de refroidissement de la pile.

Dans une variante, la ligne d'admission traverse un échangeur de chaleur, associé par une boucle à un premier échangeur de chaleur vers l'extérieur, et par une boucle à un second échangeur externe, ladite seconde boucle formant la boucle de refroidissement de la pile, les deux boucles étant connectées entre elles. Avantageusement, le second échangeur de chaleur est relié à un troisième échangeur de chaleur vers l'extérieur formant tous les deux un radiateur combiné basse température et sous refroidissement par cloisonnement, ce troisième échangeur de chaleur pouvant, le cas échéant, servir en outre d'échangeur de chaleur à des éléments extérieurs à l'ensemble des première et seconde boucles et disposés sur un circuit propre à ce troisième échangeur de chaleur vers l'extérieur.

Dans une variante, les moyens pour contrôler les flux de circulation sont constitués par des papillons pilotés, doseurs d'air, vannes 2 voies tout-ou-rien ou proportionnelles pilotées, chacune étant en amont ou en aval de l'un des échangeurs dans le cas du mode série, vannes 3 voies de mise hors circuit tout-ou-rien ou proportionnelles, chacune étant en amont ou en aval de l'un des échangeurs dans le cas du mode série.

L'invention s'applique tout particulièrement à une pile à combustible avec un compartiment interne de régulation de température avec un tel dispositif de régulation de la température dans sa ligne d'alimentation en air, la température maximale en fonctionnement normal de la première boucle d'eau d'échange de chaleur de plus haute température ne dépassant pas généralement 90 °C, cette boucle servant aussi à la régulation de température du compartiment interne de régulation de température de la pile à combustible et la température maximale en fonctionnement normal de la seconde boucle d'eau d'échange de chaleur de plus faible température ne dépassant pas généralement 60°C.

L'invention va maintenant être décrite plus en détail mais de façon non limitative en regard des figures annexées, dans lesquelles :
- la figure 61 est une représentation schématique d'un système pile à combustible avec son réseau d'alimentation et son réseau d'évacuation selon l'état de la technique,
- la figure 2 montre un dispositif de régulation de la température d'air par utilisation d'une ligne haute température et d'une ligne basse température dans un ensemble pile à combustible dans le mode de réalisation « parallèle ».
- la figure 3 montre un dispositif de régulation de la température d'air par utilisation d'une ligne haute température et d'une ligne basse température dans un ensemble pile à combustible dans le mode de réalisation « série » dans lequel les boucles de fluide sont munies chacune d'une vanne d'arrêt du fluide qui peut être proportionnelle.
- la figure 4 montre un dispositif de régulation de la température d'air par utilisation d'une ligne haute température et d'une ligne basse température dans un ensemble pile à combustible dans le mode de réalisation « série » dans lequel les boucles de fluide sont munies chacune d'une vanne de mise hors boucle (de by-pass) de l'échangeur qui peut être proportionnelle.
- les figures 5a et 5b montrent des modes de réalisation compacts de ces échangeurs.
- la figure 6 montre un dispositif de régulation de la température de la ligne d'alimentation en air à une pile à combustible par utilisation du fluide de régulation de température du compartiment interne de régulation de température de cette pile à combustible,
- la figure 7 montre une représentation schématique de l'échangeur de chaleur combiné basse température et sous refroidissement par cloisonnement des boites à eau de chacun de ses échangeurs.

La figure 61 a déjà été détaillée dans la partie introductive de la présente description.

Il convient de signaler que bien que dans la description qui va suivre il ne soit fait référence qu'à une pile à combustible, la présente invention s'applique aussi à la régulation de température à l'admission d'air pour moteur thermique ou pour la régulation de température de toute autre source d'énergie embarquée sur un véhicule. Il va de soi aussi que les véhicules en question peuvent être hybrides, c'est-à-dire thermiques et électriques où l'air d'admission du moteur thermique peut être régulé selon la présente invention. La présente invention est destinée aussi aux véhicules électriques à augmentateur d'autonomie, pouvant comprendre une gamme de véhicules allant de véhicules avec une petite pile à combustible et une grosse batterie à des véhicules avec une grosse pile à combustible et une petite batterie ou sans batterie.

La présente invention s'applique donc à la régulation d'un fluide d'admission d'une quelconque source d'énergie de véhicule équipé ou non d'une pile à combustible, cela quel que soit le taux d'hybridation du véhicule.

La pile à combustible, dont il sera question dans la suite, peut être tout aussi bien utilisée en tant que source principale d'énergie pour le véhicule qu'en augmentateur d'autonomie dans le cas d'un véhicule comprenant une batterie et une pile à combustible, ou en source d'énergie auxiliaire comme sur un véhicule thermique équipé d'une pile à combustible pour des besoins auxiliaires.

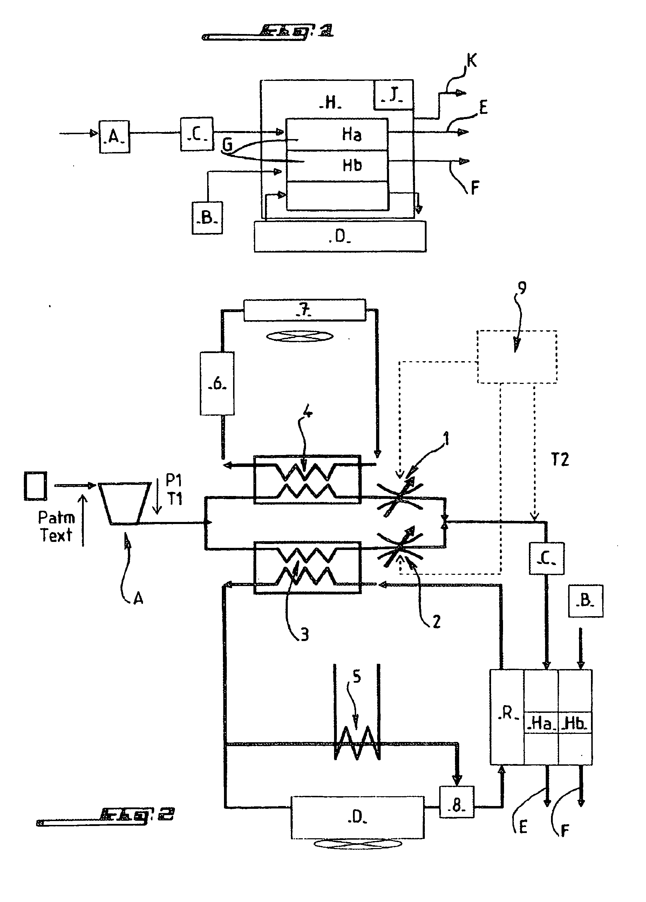

La figure 2 montre une ligne d'admission d'air pour une pile à combustible dans le mode de réalisation « parallèle » où l'air extérieur arrive à une température Text et à la pression atmosphérique Patm. Cet air est soumis à l'action d'un compresseur qui augmente sa pression P1 et sa température T1. Entre le compresseur A et l'humidificateur C est placé un dispositif de régulation de la température de cette ligne d'admission d'air, dispositif qui est l'objet de la présente invention.

Ce dispositif de régulation comprend deux boucles d'eau glycolée de températures différentes pour l'échange de chaleur:
- une première boucle d'eau glycolée de plus haute température allant jusqu'à 90 °C, cette boucle de plus haute température étant aussi la boucle de refroidissement de la pile à combustible et comprenant un échangeur air-eau 3, une résistance chauffante 5 en dérivation de l'échangeur de chaleur vers l'extérieur D qui est celui de la pile à combustible, une électrovanne 8 étant prévue dans la boucle pour la sélection de la résistance chaufante 5 ou de l'échangeur de chaleur avec l'extérieur D et cette boucle comprenant aussi le compartiment interne de régulation R de température de la pile à combustible, et
- une seconde boucle d'eau glycolée de plus faible température ne dépassant pas en général 60°C et servant en outre pour l'électronique de puissance 6, cette boucle de plus faible température comprenant un échangeur air-eau 4, un échangeur de chaleur avec l'extérieur 7 et l'électronique de puissance 6.

Il est évident qu'un autre liquide de refroidissement autre que l'eau glycolée peut être utilisé pour les échangeurs si le besoin s'en fait sentir et il est aussi évident que l'autre côté de l'échangeur est traversé par un flux d'alimentation qui peut ne pas être de l'air selon la source d'énergie alimentée. Ces échangeurs air-eau sont de préférence des échangeurs à contre-courant.

Par électronique de puissance, il est entendu les composants électroniques servant à la commande et au contrôle de la pile à combustible, par exemple la logique de commande 9 qui sera détaillée plus bas, ou d'autres logiques de commande pour la régulation des flux d'échappement de la pile à combustible si ceux-ci ne sont pas réunis à la première logique de commande et des éléments électroniques du véhicule tels que machines électriques, convertisseur, onduleurs, etc...

Les échangeurs de chaleur air-eau de cette première 3 et seconde boucle 4 seront alors avantageusement utilisés respectivement comme source chaude et source froide pour la régulation la ligne d'admission d'air en entrée de l'humidificateur C ou de la pile à combustible si l'humidificateur C n'est pas nécéssaire.

Les échangeurs de chaleur avec l'extérieur 7 et D de chaque boucle peuvent être des radiateurs avec une ventilation spécifique.

Dans le mode de réalisation « parallèle » illustré dans cette figure 2, la ligne d'admission d'air en sortie du compresseur A se divise en deux lignes parallèles, l'une des lignes, dite ligne haute température, étant dirigée vers l'échangeur air/eau haute température 3 et l'autre, dite ligne basse température, vers l'échangeur air/eau basse température 4. L'air peut ainsi être amené soit à l'un ou l'autre des échangeurs, ou soit en proportions variables vers l'un et l'autre. Ceci est effectué à l'aide de deux papillons pilotés 61 et 2, usuellement appelés doseurs d'air et disposés respectivement sur une ligne d'un échangeur. Les lignes haute température et basse température se joignent après les papillons pilotés 61 et 2 pour ne reformer qu'une seule ligne d'admission dirigée vers l'humidificateur C ou la pile à combustible. Sur la ligne d'admission après cette jonction, un capteur mesure la température T2 de cette ligne et transmet cette donnée à une logique de commande 9 afin de permettre le pilotage des papillons pilotés 61 et 2. D'autres données sont transmises à la logique de commande 9 afin qu'elle puisse piloter la régulation de température de manière adéquate. Ces données peuvent être nécessaires pour un meilleur fonctionnement du dispositif de régulation. La logique de commande 9 peut donc tenir compte de la température ambiante Text, de la température T1 de l'air dans la ligne d'admission après compression, des conditions de fonctionnement de la pile à combustible ainsi que des températures des deux boucles à basse et haute températures et du degré d'ouverture des papillons pilotés 61 et 2 afin d'anticiper la régulation de température.

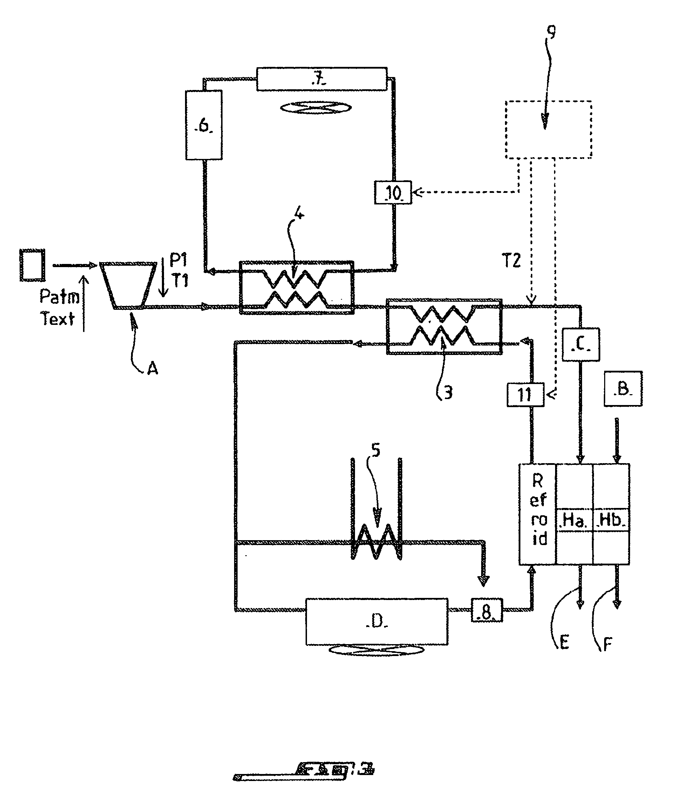

Dans la figure 3, qui reprend dans les grandes lignes la description d'un système pile à combustible dans son ensemble de la figure 2, est illustré le mode de réalisation « série » avec des vannes d'arrêt ou proportionnelles sur les lignes fluides. En particulier, la ligne d'alimentation en air ne se sépare pas en deux lignes distinctes mais passe successivement dans les échangeurs air/eau 4 et 3 respectivement alimentés par les lignes dites froide et chaude du système. En particulier également une vanne d'arrêt ou proportionnelle 610 est positionnée sur la ligne de fluide froide en amont ou en aval de l'échangeur 4 et une vanne d'arrêt ou proportionnelle 611 est positionnée en amont ou en aval de l'échangeur 3. Ces vannes de régulation du débit d'eau dans les échangeurs 3 et 4 permettent de réguler le débit d'eau et de modifier l'échange dans ces échangeurs. Ainsi la régulation en température s'effectue avec le dispositif de contrôle 9 sur ces vannes 610 et 611.

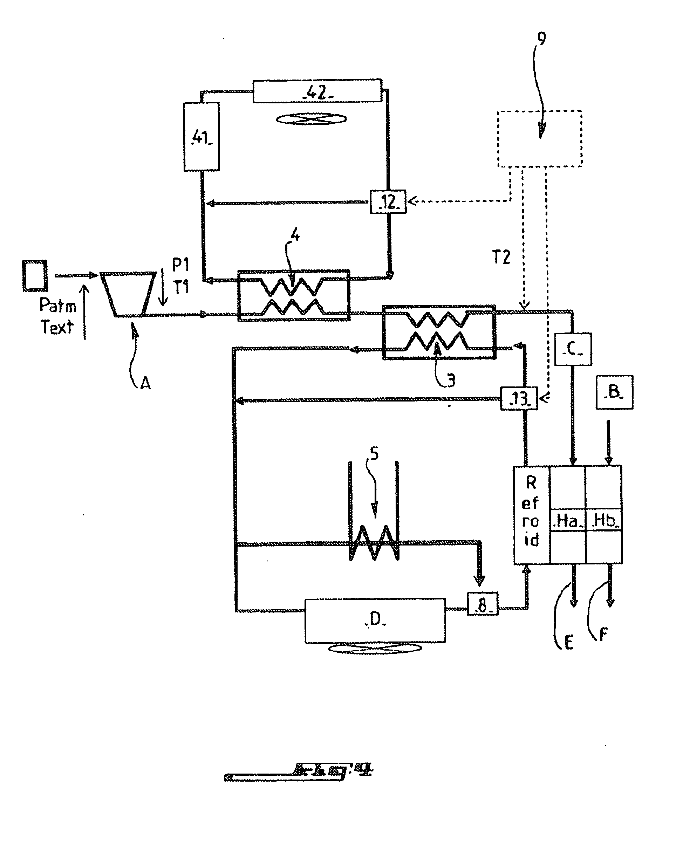

Dans la figure 4, qui reprend dans les grandes lignes la description d'un système pile à combustible dans son ensemble de la figure 2 et de la figure 3, est illustré le mode de réalisation « série » avec des vannes de mise hors circuit (de by-pass) des échangeurs 3 et 4 sur les lignes fluides. En particulier une vanne de mise hors circuit (de by-pass) totale ou proportionnelle 612 est positionnée sur la ligne de fluide froide en amont ou en aval de l'échangeur 4 et une vanne de mise hors circuit (de by-pass) totale ou proportionnelle 611 est positionnée en amont ou en aval de l'échangeur 3. Ces vannes de régulation du débit d'eau dans les échangeurs 3 et 4 permettent de réguler le débit d'eau et de modifier l'échange dans ces échangeurs en faisant passer une partie plus ou moins grande du débit dans ces échangeurs. Ainsi la régulation en température s'effectue avec le dispositif de contrôle 9 sur ces vannes 612 et 613.

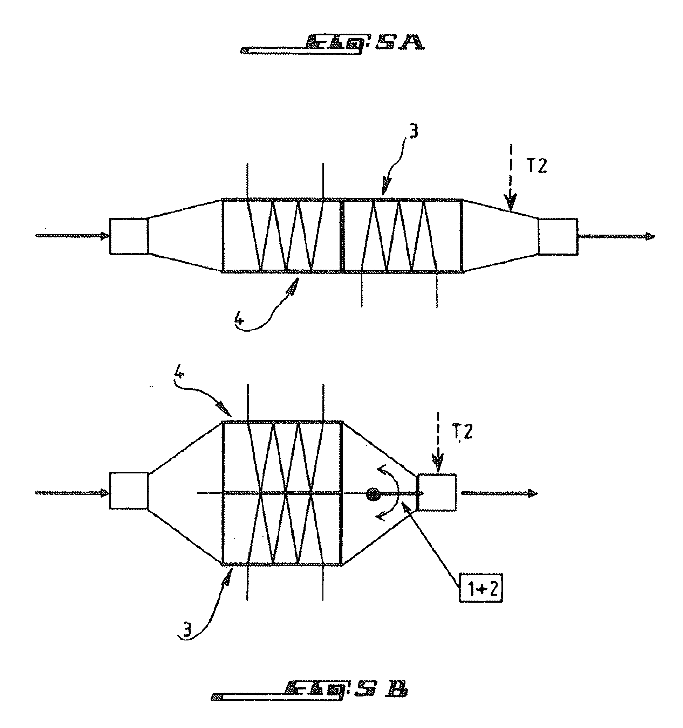

Dans les figures 5a et 5b un dispositif de régulation plus compact est obtenu en fusionnant les deux échangeurs en un seul bloc organique, optimisant la compacité de l'organe de régulation thermique de la ligne d'alimentation en air de la pile à combustible. A la figure 5a les deux échangeurs de chaleur sont montrés en étant en série et à la figure 5b en étant en parallèle. En particulier à la figure 5b, deux vannes papillons 61 et 2 peuvent être fusionnées en un seul papillon doseur 61+2 permettant ainsi de mélanger de façon continue et simple le débit d'air issu de chaque branche distincte.

Plusieurs exemples de fonctionnement du dispositif de régulation dans diverses conditions de fonctionnement vont suivre.

Pendant le démarrage de l'ensemble pile à combustible par des températures ambiantes négatives, il doit être procédé au préchauffage de la pile. La logique de commande 9 commande donc par l'intermédiaire de l'électrovanne 8 la fermeture de la partie de la première boucle alimentant l'échangeur de chaleur D de la pile à combustible et tout le flux d'eau de la première boucle passe par la résistance chauffante 5, convenablement activée par cette logique de commande 9. il est alors procédé au préchauffage de la pile par l'intermédiaire de son compartiment interne de régulation R ce qui permet d'obtenir dans un délai très court, d'environ de 30 à 60 secondes une source chaude dans ce compartiment interne R. La température relativement élevée de l'air d'admission, obtenue le cas échéant par un ralenti acceléré du compresseur et transmise par l'intermédiaire de l'échangeur de chaleur air-eau 3 de cette première boucle peut aussi aider à la montée en température de la pile atteignant rapidement une température positive.

Pendant le fonctionnement de la pile à combustible par température ambiante négative, et particulièrement à faible régime et donc à faible élévation de température due à la compression de l'air d'admission, le dispositif de régulation selon la présente invention empêche d'envoyer de l'air à une température négative dans le compartiment cathodique de la pile Ha et/ou dans l'humidificateur C en réchauffant cet air d'admission.

Pendant l'utilisation à haute température ambiante, l'élévation de température T1 liée au compresseur A surtout aux forts régimes pile peut dégrader fortement le compartiment cathodique Ha de la pile à combustible et/ou l'humidificateur C, il est alors nécessaire de refroidir l'air sortant du compresseur A par l'échangeur air/eau 4 situé sur la boucle de refroidissement basse température servant aussi à refroidir l'électronique de puissance 6.

Pendant l'utilisation à des températures tempérées, le dispositif de régulation selon la présente invention permet de réguler finement la température de l'air d'admission entre des niveaux de température adaptés au besoin moyen de la pile à combustible c'est-à-dire entre 60 et 90 °C.

Les avantages obtenus par le dispositif de régulation selon la présente invention sont nombreux. On citera entre autres :

Un tel dispositif de régulation, du fait de sa logique de commande 9 permet, dans le mode de réalisation « parallèle » peut modifier le réglage des papillons pilotés 61 et 2 de dosage d'air et donc envoyer selon les besoins plus ou moins d'air vers l'échangeur air-eau 3 de la première boucle haute température ou l'échangeur air-eau 4 de la seconde boucle basse température avec la ligne d'admission distincte respective. Un tel dispositif de régulation, du fait de sa logique de commande 9 permet, dans le mode de réalisation « série », de modifier l'alimentation en fluide respectivement froid ou chaud dans les échangeurs 4 et 3 ce qui autorise la régulation de l'apport calorifique à l'air.

Ce système permet d'obtenir un réglage fin de la température T2 de la ligne d'admission d'air avant l'humidificateur C et/ou la pile à combustible dans la plage de température compatible avec le fonctionnement de la pile, c'est-à-dire 60°C-90°C en fonctionnement normal.

Un tel dispositif apporte aussi une élévation de température de la pile lors des démarrages en conditions de gel du fait de l'utilisation de la résistance chauffante 5 pour chauffer le compartiment de régulation de chaleur D de la pile à combustible.

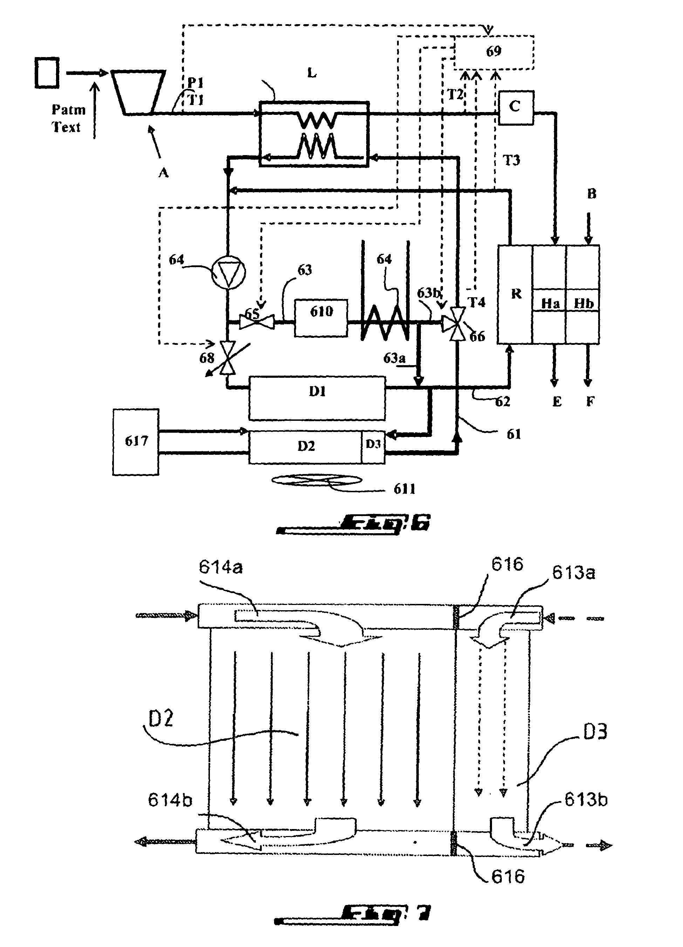

La figure 7 montre une ligne d'admission d'air pour la cathode Ha d'une pile à combustible où l'air extérieur arrive à une température Text et à la pression atmosphérique Patm. Cet air est soumis à l'action d'un compresseur A qui augmente sa pression P1 et sa température T1. Entre le compresseur A et l'humidificateur C, est placé un dispositif de régulation de la température de cette ligne d'admission d'air, dispositif qui est l'objet de la présente invention.

Ce dispositif de régulation de la température, s'applique d'une part, à la ligne d'alimentation d'air à la pile à combustible et, d'autre part, au compartiment interne R de régulation de la température avec de l'eau comme fluide d'échange de chaleur, ce dispositif de régulation comprenant une première boucle 61 d'eau, cette boucle 61 étant reliée à la ligne d'alimentation d'air par un échangeur de chaleur L air/eau et comprenant en outre une pompe 64, un premier échangeur D1 de chaleur vers l'extérieur et des moyens de régulation 66, 68 du débit d'eau vers ce premier échangeur D1 de chaleur vers l'extérieur. Le dispositif comprend en outre une seconde boucle 62 d'eau traversant le compartiment interne R de régulation de la pile et étant parcourue par l'eau de régulation de température de ce compartiment, cette première boucle 61 et seconde boucle 62 étant connectées entre elles en ayant en commun la pompe 64, l'échangeur de chaleur D1 avec l'extérieur et une partie des moyens de régulation 68 pour réguler le débit d'eau dans ces boucles 61, 62. Ces moyens de régulation 68 sont commandés par une logique de commande 69 au moins selon la température de l'air T2 dans la ligne d'alimentation après passage dans l'échangeur de chaleur L air-eau de la ligne, la température T3 de l'eau à la sortie du compartiment interne R de régulation de température de la pile à combustible et la température T4 de l'eau amenée à l'échangeur de chaleur L air/eau entre la ligne d'alimentation et la première boucle 61.

Comme dans le cas de la figure 2, il est évident qu'un autre liquide de refroidissement que l'eau peut être utilisé pour la régulation si le besoin s'en fait sentir, par exemple de l'eau avec un apport d'antigel. Il est aussi évident que l'autre côté de l'échangeur est traversé par un flux d'alimentation qui peut ne pas être de l'air selon la source d'énergie alimentée. Ces échangeurs de chaleur ligne d'alimentation/première boucle sont de préférence des échangeurs à contre-courant.

Pour la détermination de la température T2 sur la ligne d'alimentation après passage via l'échangeur L de chaleur air/eau, un capteur mesure cette température T2 de la ligne et transmet cette donnée à la logique de commande 69 afin de permettre le pilotage des divers moyens de régulation. D'autres données peuvent aussi être transmises à la logique de commande 69 afin qu'elle puisse piloter la régulation de température de manière adéquate, comme il sera détaillé par la suite.

La première boucle 61 et la seconde boucle 62 ont aussi en commun un second échangeur D3 de chaleur vers l'extérieur, disposé après le premier échangeur D1 de chaleur vers l'extérieur et effectuant un sous refroidissement de l'eau des première et seconde boucles 61, 62. La première boucle 61 comprend aussi un moyen de chauffage 67 placé dans une branche 63 en dérivation de l'échangeur D1 de chaleur vers l'extérieur de la première boucle 61, cette branche 63 de dérivation rejoignant la première boucle 61 avant le second échangeur D3 de chaleur par l'intermédiaire d'un bras 63a, des moyens de régulation 65 et 68 permettant de distribuer les débits d'eau entre l'échangeur D1 de chaleur et le moyen de chauffage 67.

La branche 63 de dérivation, par l'intermédiaire d'un deuxième bras 63b, et la première boucle 61 se rejoigne aussi par une seconde jonction après que l'eau de la première boucle 61 ait traversé le second échangeur D3 de chaleur vers l'extérieur et avant qu'elle n'aille à l'échangeur L de chaleur air-eau de la ligne d'alimentation, cette première boucle 61 présentant un moyen de régulation 66 de fluide dans la branche 63 de dérivation et dans la première boucle 61 avant et après jonction de celle-ci avec le bras 63b de la branche 63 de dérivation, ce moyen de régulation 66 étant sous la forme d'une électrovanne à trois voies proportionnelle commandée par la logique de commande 69 notamment selon la température T2 de la ligne d'alimentation à la sortie de l'échangeur L de chaleur air/eau et selon la température T4 prise après l'électrovanne 66 dans la première boucle 61 avant l'échangeur L de chaleur air/eau de la ligne d'alimentation avec la première boucle 61.

L'air en sortie de l'organe de compression A est donc dirigé vers l'échangeur L air/eau de la ligne d'alimentation et de la première boucle 61 et l'eau qui alimente cet échangeur L provient du second échangeur D3 de chaleur vers l'extérieur.

Ce second échangeur D3 de chaleur vers l'extérieur effectue un sous-refroidissement de l'eau de la première boucle 61, refroidissement rendu nécessaire par le fait que la différence de température de l'eau entre l'entrée et la sortie de la pile qui est environ de 5°C n'est pas suffisante pour permettre une humidification satisfaisante de l'air dans la ligne d'alimentation passant dans l'humidificateur C. C'est le cas par exemple lors d'une humidification par un humidificateur C à membrane utilisant l'eau contenue dans l'air à la sortie de la pile pour humidifier l'air à l'entrée de la pile sur la ligne d'alimentation de la cathode Ha de la pile. Pour cela, il faudrait que l'air sec à l'entrée de l'humidificateur C soit abaissé 610°C en dessous de la température de l'air humide sortant par la ligne E d'échappement de la cathode Ha de la pile et donc de la température T3 de l'eau de régulation du compartiment interne R en sortie de pile. Cet écart de température est rendu possible par l'utilisation du sous-refroidissement piloté effectué par le second échangeur D3 de chaleur vers l'extérieur.

Lors des fonctionnements en climat froid, et pendant les phases de démarrage par temps froid, l'échangeur D1 de chaleur vers l'extérieur de la première boucle 61 qui sert principalement au refroidissement de l'eau du compartiment interne R de régulation de la pile à combustible est généralement au moins partiellement mis hors boucle par le moyen de régulation 68, par exemple une électrovanne, pour faciliter la montée en température de l'eau grâce à la dissipation thermique de la pile ou à l'aide du moyen de chauffage 67 de la branche 63 de dérivation, par exemple une résistance électrique.

Comme le piquage de l'eau en sortie du premier échangeur D1 de chaleur vers l'extérieur, cet eau étant dirigée vers le second échangeur D3 de chaleur, se fait après la première jonction entre la première boucle 61 passant dans ce premier échangeur D1 et le premier bras 63a de la branche 63 de dérivation du moyen de chauffage 67, la direction de circulation de l'eau entre cette jonction et le piquage vers le second échangeur D3 est maintenue quelles que soient les positions des moyens de régulation 65, 66, 68. Ceci a lieu par temps chaud et dès que la température T3 du compartiment interne R de la pile dépasse une limite supérieure telle que l'air ne pourrait plus être amené à un niveau de température T2 après l'échangeur L air/eau suffisamment bas.

Par temps froid, le premier échangeur D1 de chaleur vers l'extérieur est mis hors boucle par les moyens de régulation 66 et 68, composés au moins d'une électrovanne 66 à trois voies proportionnelle de telle façon que l'eau amenée à l'échangeur L air/eau de la ligne d'alimentation soit à une température T4 supérieure aux conditions de gel. En effet dans ces conditions, la température de la pile est montée puis maintenue à plus de 0°C, en général à une température supérieure ou égale à 5°C, soit par le moyen de chauffage 67 de la branche 63 de dérivation à la première boucle 61 ou soit par sa propre dissipation thermique

Le second échangeur de chaleur D3 vers l'extérieur de la première boucle 61 est relié avec un troisième échangeur D2 de chaleur vers l'extérieur formant un radiateur combiné basse température et sous refroidissement par cloisonnement, ce troisième échangeur D2 de chaleur pouvant, le cas échéant, servir en outre d'échangeur de chaleur à des éléments extérieurs 617 à l'ensemble des première et seconde boucles 61, 62. Le troisième échangeur D2 de chaleur vers l'extérieur est sur un circuit dit circuit de régulation à température basse et dont la température ne dépasse pas 60°C contrairement au circuit formé par les deux premières boucles 61, 62 et la dérivation 3, où l'eau sortant du compartiment interne R de régulation de la pile peut atteindre 80°C, ce circuit étant caractérisé comme réalisant le circuit haute température. De préférence, sur le circuit basse température du troisième échangeur D2 peut se trouver comme éléments extérieurs 617 à réguler de l'électronique de puissance. Par électronique de puissance, il est entendu les composants électroniques servant à la commande et au contrôle de la pile à combustible, par exemple la logique de commande 69, d'autres logiques de commande pour la régulation des flux d'échappement de la pile à combustible si celles-ci ne sont pas réunies à la première logique de commande 69 et des éléments électroniques du véhicule tels que machines électriques, convertisseur, onduleurs, etc...

Avantageusement, le circuit de l'échangeur D2 peut être normalement dédié au refroidissement de l'électronique de puissance du véhicule.

Ce troisième échangeur D3 de chaleur vers l'extérieur peut être placé juste en dessous du premier échangeur D1 et être doté d'un ventilateur 611.

La branche de dérivation 63, portant aussi éventuellement l'aérotherme 610 de chauffage habitacle du véhicule, a son moyen de chauffage 67 qui, le cas échéant, peut être placé en position inopérante de telle sorte que l'eau passant par la branche 63 de dérivation ne subisse aucun échange thermique autre que les pertes inévitables.

D'autres données que précédemment citées peuvent être transmises à la logique de commande 69 afin qu'elle puisse piloter la régulation de température de manière adéquate. Ces données peuvent être nécessaires pour un meilleur fonctionnement du dispositif de régulation pour la ligne d'alimentation en air, d'une part, et la pile, d'autre part. La logique de commande 69 peut donc tenir compte d'autres paramètres, notamment de la température extérieure Text, la température T1 et/ou la pression P1 régnant dans la ligne d'admission avant l'entrée dans l'échangeur de chaleur L air/eau de la ligne avec la première boucle, le débit de flux dans la ligne d'alimentation, les paramètres d'échange de chaleur propres à chacune des boucles 61 et 62 , notamment la température de chaque boucle 61 ou 62, et les paramètres des moyens de régulation 65, 66, 68, les paramètres d'échange de chaleur des échangeurs de chaleur D1, D2, D3 vers l'extérieur respectifs de la boucle ou du circuit basse température, le cas échéant l'apport de chaleur des divers éléments 610, 617 se trouvant sur chaque boucle 61 ou 62 ou sur la branche 63 de dérivation ou sur le circuit du troisième échangeur D2 de chaleur vers l'extérieur, et divers paramètres de la source d'énergie, comme sa puissance d'entrée et de sortie, sa température T3 de fonctionnement, le cas échéant les paramètres de son dispositif interne R de régulation de température.

La figure 7 détaille le principe de fonctionnement d'un échangeur de chaleur vers l'extérieur combiné. Un tel échangeur de chaleur combiné est avantageusement utilisé pour réaliser le second D2 et le troisième échangeur D3 de chaleur vers l'extérieur. Une cloison 616 sépare les deux circuits 613a, 613b ; 614a, 614b d'eau respectifs à chacun des échangeurs D2 et D3 de chaleur vers l'extérieur formant ainsi deux zones distinctes présentant une répartition 613a, 614a et une collecte d'eau 613b, 614b sur deux groupes de tubes d'un même faisceau. Cette disposition permet de rendre plus compact l'ensemble des deux échangeurs D2 et D3 de chaleur vers l'extérieur. Ainsi, l'air extérieur de refroidissement poussé par le ou les ventilateurs 611 traverse successivement le troisième échangeur D2 de chaleur dit aussi radiateur mixte basse température D2, le second échangeur de chaleur D3 vers l'extérieur dit aussi radiateur de sous refroidissement et enfin le premier échangeur D1 de chaleur vers l'extérieur dit radiateur haute température de la pile à combustible et de la ligne d'alimentation à la cathode Ha de cette pile.

Plusieurs exemples de fonctionnement du dispositif de régulation dans diverses conditions de fonctionnement vont suivre.

Pendant le démarrage de l'ensemble pile à combustible par des températures ambiantes négatives, il doit être procédé au préchauffage de la pile. La logique de commande 69 commande de mettre hors boucle la partie de la première boucle 61 alimentant le premier échangeur D1 de chaleur vers l'extérieur et tout le flux d'eau de la première boucle 61 passe par la branche 63 de dérivation du moyen de chauffage 67, convenablement activé par la logique de commande 69. Il est alors procédé au préchauffage de la pile par l'intermédiaire de son compartiment interne de régulation R ce qui permet d'obtenir dans un délai très court, d'environ de 30 à 60 secondes une source chaude dans ce compartiment interne R. Cette mise hors boucle du premier échangeur D1 de chaleur pendant la phase de préchauffage est effectuée par l'électrovanne 68, l'eau ne passant alors que dans la branche 63 de dérivation de chauffage. Ceci permet de disposer d'une source chaude et d'augmenter si nécessaire la température T1 de l'air à la sortie du compresseur A pour qu'il présente en aval dans la ligne d'alimentation une température T2 qui soit compatible avec le fonctionnement de l'humidificateur C ou de la pile à combustible.

Pendant le fonctionnement de la pile à combustible par température ambiante négative, et particulièrement à faible régime et donc à faible élévation de température due à la compression de l'air d'admission, le dispositif de régulation selon la présente invention empêche d'envoyer de l'air à une température négative dans le compartiment cathodique de la pile Ha et/ou dans l'humidificateur C en réchauffant cet air d'admission. En effet, l'eau alimentant l'échangeur L de chaleur air/eau de la ligne d'alimentation est alors à des températures T4 positives et inférieures à la température de la pile T3 du fait d'un dosage approprié au moyen de l'électrovanne 66 du débit d'eau provenant du second échangeur D3 de chaleur vers l'extérieur et du débit d'eau venant du compartiment interne R de régulation réchauffé par le fonctionnement de la pile.

Pendant l'utilisation à haute température ambiante, l'élévation de température T1 liée au compresseur A, surtout aux forts régimes pile, peut dégrader fortement le compartiment cathodique Ha de la pile à combustible et/ou l'humidificateur C, il est alors nécessaire de refroidir l'air sortant du compresseur A par l'échangeur air/eau L ligne-première boucle en utilisant le débit d'eau ayant successivement traversé le premier échangeur D1 de chaleur vers l'extérieur et le second échangeur D3 de chaleur. La branche 63 de dérivation du moyen de chauffage 67 est alors mise hors circuit par action de l'électrovanne 65.

Pendant l'utilisation à des températures tempérées, le dispositif de régulation selon la présente invention permet de réguler finement la température de l'air d'admission entre des niveaux de température adaptés au besoin moyen de la pile à combustible c'est-à-dire entre 60 et 80°C. Cette température T2 est toujours située quelques degrés, en général 610°C, en dessous de la température de la pile T3 pour faciliter l'humidification. Cela vaut particulièrement pour les humidificateurs C à membranes. L'eau passant dans l'échangeur L air/eau provient alors de façon régulée à l'aide de l'électrovanne 66, soit par le bras 63b de la branche 63 de dérivation comprenant le moyen de chauffage 67, cette eau étant alors à la température de la pile T3 avec dans ces conditions l'électrovanne 65 en position ouverte, soit des premier D1 et second D3 échangeurs de chaleur vers l'extérieur.

Un tel dispositif de régulation, du fait de sa logique de commande 69 qui peut modifier le réglage des moyens de régulation, permet d'obtenir une régulation précise de la température T2 de la ligne d'admission d'air avant l'humidificateur C et/ou de la pile à combustible dans la plage de température compatible avec le fonctionnement de la pile, c'est-à-dire 50°C-80°C en fonctionnement normal.

De plus, il apporte aussi une élévation de température de la pile lors des démarrages en conditions de gel du fait de l'utilisation du moyen de chauffage 67 pour chauffer le compartiment interne R de régulation de chaleur de la pile à combustible.

Le dispositif selon la présente invention permet aussi une limitation du nombre d'organes intervenant pour ce préchauffage, et une diminution de leur taille.

Il apparaît donc clairement que ce dispositif de régulation est très avantageux par rapport à une architecture connue avec un radiateur air/air pouvant être mis hors circuit et un réchauffeur électrique d'air.

Dans ces diverses variantes le dispositif selon l'invention permet l'utilisation de la chaleur dégagée par la pile afin de chauffer l'air d'admission lorsque l'élévation de température d'air dans le compresseur A n'est pas suffisante, ce qui se produit dans le cas de régime bas par température ambiante Text en dessous de zéro. Ceci est obtenu pour tout régime de la pile à combustible et toute vitesse véhicule.

Le dispositif permet aussi l'utilisation du circuit de refroidissement de l'électronique de puissance du véhicule pour refroidir l'air d'admission par forte chaleur ambiante et à régime élevé, ce qui permet de s'affranchir de la vitesse véhicule et donc de l'ajout d'un radiateur air/air ventilé. En effet, en particulier sur les véhicules à augmentateur d'autonomie, la pile à combustible est supposée pouvoir tourner à fort régime même lorsque le véhicule est à l'arrêt.

De plus, le dispositif est plus économique énergétiquement que l'utilisation d'une résistance chauffante agissant directement sur l'air d'admission. En effet, il utilise la chaleur dissipée par la pile en fonctionnement continu et apporte par la résistance de préchauffage 5 un appoint ciblé pour le démarrage. Le régime de ralenti acceléré du compresseur, selon l'état de la technique, comme seul moyen pour éléver suffisamment la température est moins rentable énergétiquement et peut entraîner des risques de déshydratation des membranes de la pile avec dégradation possible de celle-ci.

Il apparaît donc clairement que ce dispositif de régulation est très avantageux par rapport à une architecture connue avec un radiateur air/air pouvant être mis hors circuit et un réchauffeur électrique d'air.

## Revendications

1. Procédé de régulation de la température d'une ligne d'admission cathodique (Ha) d'une pile à combustible, la pile étant refroidie au moyen d'un boucle de refroidissement traversant un compartiment interne de la pile, la ligne d'admission étant par ailleurs munie d'un compartiment interne refroidi au moyen d'une boucle de refroidissement, ladite ligne d'admission étant associée à des moyens de régulation thermique, **caractérisé en ce que** lesdits moyens de régulation thermique comportent un premier échangeur thermique dit froid et un second échangeur dit chaud, associé à la boucle de refroidissement de la pile.

2. Procédé selon la revendication 1, dans lequel la ligne d'admission traverse en série, le premier échangeur froid, élément d'une boucle froide et le second échangeur chaud et la température de la ligne d'admission est régulée en contrôlant les débits de fluide de refroidissement circulant dans la boucle froide et/ou la boucle de refroidissement de la pile.

3. Procédé selon la revendication 1, dans lequel la ligne d'admission comporte deux branches parallèles, l'une des branches traversant le premier échangeur froid, l'autre branche traversant le second échangeur chaud, et on contrôle les débits admis dans l'une ou l'autre des branches.

4. Procédé selon la revendication 1, dans lequel les moyens de régulation thermique comportent une première boucle dite froide associée à un échangeur thermique (L), ladite boucle étant elle-même associée à la boucle de refroidissement de la pile.

5. Dispositif de régulation de la température d'une ligne d'admission cathodique d'une pile à combustible comportant une boucle de refroidissement de la pile, associée à un échangeur externe (D ; D3) et un échangeur (4, L) - traversé par la ligne d'admission cathodique - associé à une boucle de contrôle thermique de la ligne d'admission, et des moyens (3 ; 65, 68, 66) pour échanger la chaleur et ou contrôler les flux de circulation entre la boucle de refroidissement de la pile et la ligne d'admission cathodique ou entre la la boucle de refroidissement de la pile et la boucle de contrôle thermique de la ligne d'admission.

6. Dispositif selon la revendication 5, **caractérisé en ce que** la boucle de refroidissement de la pile comprend un moyen de chauffage (5 ; 64) placé en dérivation de l'échangeur de chaleur (D ; D3) vers l'extérieur de la boucle, une électrovanne (8 ; 68) permettant de réguler les flux traversant le moyen de chauffage ou l'échangeur de chaleur pour maintenir une température de consigne.

7. Dispositif selon la revendication 5 ou la revendication 6, **caractérisé en ce qu'**il comporte de plus une logique de commande (9) pour commander des moyens de régulation des flux circulant dans les différentes boucles de refroidissement ou de contrôle thermique.

8. Dispositif selon l'une des revendications 5 à 7 dans lequel la ligne d'admission comporte deux branches parallèles, avec des moyens de régulation du débit (1 ; 2) dans l'une ou l'autre branche, une première branche étant traversée par l'échangeur (4) associé à la boucle de contrôle thermique et la seconde branche par un échangeur (3) associé à l'échangeur externe (D) de la boucle de refroidissement de la pile.

9. Dispositif selon l'une des revendications 5 à 7 dans lequel la ligne d'admission traverse en série, l'échangeur (4) associé à la boucle de contrôle thermique et un échangeur (3) associé à l'échangeur externe (D) de la boucle de refroidissement de la pile.

10. Dispositif selon l'une des revendications 5 à 7, dans lequel la ligne d'admission traverse un échangeur de chaleur (L), associé par une boucle (61) à un premier échangeur (D1) de chaleur vers l'extérieur, et par une boucle (62) à un second échangeur externe (D3), ladite seconde boucle (62) formant la boucle de refroidissement de la pile, les deux boucles étant connectées entre elles.

11. Dispositif selon la revendication 10, dans lequel le second échangeur de chaleur (D3) est relié à un troisième échangeur de chaleur (D2) vers l'extérieur formant tous les deux un radiateur combiné basse température et sous refroidissement par cloisonnement, ce troisième échangeur (D2) de chaleur pouvant, le cas échéant, servir en outre d'échangeur de chaleur à des éléments extérieurs (17) à l'ensemble des première et seconde boucles (1 et 2) et disposés sur un circuit propre à ce troisième échangeur (D3) de chaleur vers l'extérieur.

12. Dispositif selon l'une quelconque des revendications 5 à 11, **caractérisé en ce que** les moyens pour contrôler les flux de circulation sont constitués par des papillons pilotés, doseurs d'air, vannes 2 voies tout-ou-rien ou proportionnelles pilotées, chacune étant en amont ou en aval de l'un des échangeurs (3,4) dans le cas du mode série, vannes 3 voies de mise hors circuit tout-ou-rien ou proportionnelles, chacune étant en amont ou en aval de l'un des échangeurs (3,4) dans le cas du mode série.

## Claims

1. Method for regulating the temperature of a cathode feed line (Ha) of a fuel cell, the cell being cooled by means of a cooling loop passing through an internal compartment of the cell, the feed line furthermore being cooled, equipped with an internal compartment cooled by means of a cooling loop, the said feed line being associated with temperature regulation means, **characterized in that** the said temperature regulation means comprise a first heat exchanger, designated cold, and a second exchanger designated hot, associated with the cooling loop of the cell.

2. Method according to Claim 1, in which the feed line passes through in series the first cold exchanger, element of a cold loop and the second hot exchanger and the temperature of the feed line is regulated by controlling the flows of cooling fluid circulating in the cold loop and/or cooling loop of the cell.

3. Method according to Claim 1, in which the feed line comprises two parallel branches, one of the branches passing through the first cold exchanger, the other branch passing through the second hot exchanger, and the admitted flows are controlled in one or other of the branches.

4. Method according to Claim 1, in which the temperature regulation means comprise a first loop, designated cold, associated with a heat exchanger (L), the said loop being itself associated with the cooling loop of the cell.

5. Device for regulating the temperature of a cathode feed line of a fuel cell comprising a cooling loop of the cell, associated with an external exchanger (D; D3) and an exchanger (4, L) - passed through by the cathode feed line - associated with a temperature control loop of the feed line and **characterized in that** it comprises means (3; 65, 68, 66) to exchange heat and or control the circulation flows between the cooling loop of the cell and the cathode feed line or between the cooling loop of the cell and the temperature control loop of the feed line.

6. Device according to Claim 5, **characterized in that** the cooling loop of the cell comprises a heating means (5; 64) placed branching from the heat exchanger (D; D3) towards the exterior of the loop, with a solenoid valve (8; 68) allowing the regulation of the flows passing through the heating means or the heat exchanger to maintain a setpoint temperature.

7. Device according to Claim 5 or Claim 6, **characterized in that** it further comprises a command logic (9) to command regulating means of the flows circulating in the different cooling or temperature control loops.

8. Device according to one of Claims 5 to 7, in which the feed line comprises two parallel branches, with regulating means of the flow (1; 2) in one or other branch, a first branch being passed through by the exchanger (4) associated with the temperature control loop and the second branch by an exchanger (3) associated with the external exchanger (D) of the cooling loop of the cell.

9. Device according to one of Claims 5 to 7, in which the feed line passes through in series the exchanger (4) associated with the temperature control loop and an exchanger (3) associated with the external exchanger (D) of the cooling loop of the cell.

10. Device according to one of Claims 5 to 7, in which the feed line passes through a heat exchanger (L), associated by a loop (61) with a first heat exchanger (D1) towards the exterior, and by a loop (62) to a second external exchanger (D3), the said second loop (62) forming the cooling loop of the cell, the two loops being connected with each other.

11. Device according to Claim 10, in which the second heat exchanger (D3) is connected to a third heat exchanger (D2) towards the exterior, both forming a low temperature combined radiator and under cooling by partitioning, this third heat exchanger (D2) being able, if necessary, to further serve as a heat exchanger at exterior elements (17) to the whole of the first and second loops (1 and 2) and arranged on a circuit suited to this third heat exchanger (D3) towards the exterior.

12. Device according to any one of Claims 5 to 11, **characterized in that** the means for controlling the circulation flows are constituted by driven butterfly valves, air feeders, driven on-off or proportional valves 2, each being upstream or downstream of one of the exchangers (3, 4) in the case of series mode, disconnect, on-off or proportional valves 3, each being upstream or downstream of one of the exchangers (3, 4) in the case of series mode.

## Patentansprüche

1. Verfahren zum Regulieren der Temperatur einer kathodischen Einlassleitung (Ha) einer Brennstoffzelle, wobei die Brennstoffzelle mittels einer Kühlschleife, die eine interne Abteilung der Brennstoffzelle durchquert, gekühlt wird, wobei die Einlassleitung weiterhin mit einer internen Abteilung, die mittels einer Kühlschleife gekühlt wird, versehen ist, wobei die Einlassleitung mit Wärmeregulierungsmitteln verbunden ist, **dadurch gekennzeichnet, dass** die Mittel zur Wärmeregulierung einen ersten Wärmeaustauscher, kalter Wärmeaustauscher genannt, und einen zweiten Wärmeaustauscher, heißer Wärmeaustauscher genannt, der mit der Kühlschleife der Brennstoffzelle verbunden ist, aufweisen.

2. Verfahren nach Anspruch 1, bei dem die Einlassleitung in Serie den ersten kalten Wärmeaustauscher, Element einer kalten Schleife, und den zweiten heißen Wärmeaustauscher durchquert, und die Temperatur der Einlassleitung durch Steuern der Durchflüsse von Kühlmittel, das in der kalten Schleife und/oder der Kühlschleife der Brennstoffzelle zirkuliert, reguliert wird.

3. Verfahren nach Anspruch 1, bei dem die Einlassleitung zwei parallele Zweige aufweist, wobei einer der Zweige den ersten kalten Wärmeaustauscher durchquert, wobei der andere Zweig den zweiten heißen Wärmeaustauscher durchquert, und man die Durchflüsse, die in den einen oder anderen der Zweige eingelassen werden, steuert.

4. Verfahren nach Anspruch 1, bei dem die Mittel zur Wärmeregulierung eine erste so genannte kalte Schleife aufweisen, die mit einem Wärmeaustauscher (L) verbunden ist, wobei die Schleife selbst mit der Kühlschleife der Brennstoffzelle verbunden ist.

5. Vorrichtung zur Wärmeregulierung einer kathodischen Einlassleitung einer Brennstoffzelle, die eine Kühlschleife der Brennstoffzelle aufweist, die mit einem externen Wärmeaustauscher (D; D3) und einem Wärmeaustauscher (4, L), der von der kathodischen Einlassleitung durchquert wird, der mit einer Wärmesteuerschleife der Einlassleitung verbunden ist, aufweist, **dadurch gekennzeichnet, dass** sie Mittel (3; 65, 68, 66) aufweist, um die Wärme auszutauschen oder die Zirkulationsflüsse zwischen der Kühlschleife der Brennstoffzelle und der kathodischen Einlassleitung oder zwischen der Kühlschleife der Brennstoffzelle und der Wärmesteuerschleife der Einlassleitung zu steuern.

6. Vorrichtung nach Anspruch 5, **dadurch gekennzeichnet, dass** die Kühlschleife der Brennstoffzelle ein Heizmittel (5; 64) aufweist, das in Abzweigung von dem Wärmeaustauscher (D; D3) zur Außenseite der Schleife platziert ist, wobei ein Magnetventil (8; 68) das Regulieren der Flüsse erlaubt, die das Heizmittel oder den Wärmeaustauscher durchqueren, um eine Solltemperatur aufrechtzuerhalten.

7. Vorrichtung nach Anspruch 5 oder Anspruch 6, **dadurch gekennzeichnet, dass** sie weiterhin eine Steuerlogik (9) zum Steuern der Mittel zur Regulierung der Flüsse, die in den verschiedenen Kühlschleifen oder Wärmesteuerschleifen zirkulieren, aufweist.

8. Vorrichtung nach einem der Ansprüche 5 bis 7, bei der die Einlassleitung zwei parallele Zweige aufweist, mit Mitteln zur Durchflussregulierung (1; 2) in dem einen oder dem anderen Zweig, wobei ein erster Zweig von dem Wärmeaustauscher (4), der mit der Wärmesteuerschleife verbunden ist, und der zweite Zweig durch einen Wärmeaustauscher (3), der mit dem externen Wärmeaustauscher (D) der Kühlschleife der Brennstoffzelle verbunden ist, durchquert wird.

9. Vorrichtung nach einem der Ansprüche 5 bis 7, bei der die Einlassleitung in Serie den Wärmeaustauscher (4), der mit der Wärmesteuerschleife verbunden ist, und einen Wärmeaustauscher (3), der mit dem externen Wärmeaustauscher (D) der Kühlschleife der Brennstoffzelle verbunden ist, durchquert.

10. Vorrichtung nach einem der Ansprüche 5 bis 7, bei der die Einlassleitung einen Wärmeaustauscher (L), der mit einer Schleife (61) mit einem ersten Wärmeaustauscher (D1) nach außen verbunden ist, und mit einer Schleife (62) mit einem externen Wärmeaustauscher (D3) verbunden ist, durchquert, wobei die zweite Schleife (62) die Kühlschleife der Brennstoffzelle bildet, wobei die zwei Schleifen untereinander verbunden sind.

11. Vorrichtung nach Anspruch 10, bei der der zweite Wärmeaustauscher (D3) mit einem dritten Wärmeaustauscher (D2) nach außen verbunden ist, die beide einen kombinierten Niedertemperaturradiator und unter Kühlung durch Abschottung bilden, wobei dieser dritte Wärmeaustauscher (D2) gegebenenfalls außerdem als Wärmeaustauscher für Elemente (17), die außerhalb der Baugruppe der ersten und der zweiten Schleife (1 und 2) sind und die auf einem Kreislauf angeordnet sind, der diesem dritten Wärmeaustauscher (D3) nach außen gehört, dienen kann.

12. Vorrichtung nach einem der Ansprüche 5 bis 11, **dadurch gekennzeichnet, dass** die Mittel zum Steuern der Zirkulationsflüsse aus gesteuerten Drosselventilen, Luftdosierern, Alles-oder-Nichts- oder gesteuerten proportionalen Zweiwegeventilen bestehen, wobei sich jedes stromaufwärts oder stromabwärts von einem der Wärmeaustauscher (3, 4) in dem Fall des Serienbetriebs befindet, Alles-oder-Nichts- oder proportionale Abschalt-Dreiwegeventile, wobei sich jedes stromaufwärts oder stromabwärts eines der Wärmeaustauscher (3, 4) in dem Fall des Serienbetriebs befindet.
